# EUROPÄISCHE PATENTSCHRIFT

(11) **EP 0 734 693 B1**
(45) Veröffentlichungstag und Bekanntmachung des Hinweises auf die Patenterteilung: **31.05.2000**
(21) Anmeldenummer: 96103273.7
(22) Anmeldetag: 03.03.1996
(51) Int. Cl.: A61C 17/00

(54) **Dentales Vakuumdreinagesystem mit Siphon**
Dental vacuum drainage system with syphon
Système de dreinage à vide avec syphon pour l'art dentaire

(30) Priorität: 25.03.1995 DE 19510462
(43) Veröffentlichungstag der Anmeldung: 02.10.1996
(73) Patentinhaber: Dürr Dental GmbH & Co. KG, 74321 Bietigheim-Bissingen (DE)
(72) Erfinder: Hofmann, Hans-Joachim, 73630 Remshalden (DE); Schnepf, Jürgen, 74080 Heilbronn (DE); Grotz, Uwe, 70771 Leinfelden-Echterdingen (DE)
(74) Vertreter: Ostertag, Reinhard

(56) Entgegenhaltungen:
- EP-A- 0 211 808
- WO-A-93/16655
- US-A- 5 017 135

## Beschreibung

Bei dentalen Sauganlagen besteht generell das Problem, daß das an einem Arbeitsplatz anfallende Gemisch aus Wasser, Feststoffpartikeln und Luft über im Gebäude verlegte Saugleitungen zu einer zentralen Stelle gefördert werden muß, an welcher die Saugmaschine und ein vorgeschalteter Feststoff- und Flüssigkeitsabscheider angeordnet sind.

Um zu vermeiden, daß sich in den im Gebäude verlegten Leitungen zu viele Partikel festsetzen, ist schon vorgeschlagen worden (WO 93/16655), durch diese Leitungen in zeitlichen Abständen Fluid-Reinigungspropfen zu schießen, die aus einer turbulenten Mischung aus Wasser und Luft bestehen.

In der EP-A- 0 211 808 ist eine dentale Sauganlage beschrieben, bei welcher an eine Austragpumpe eines Separators, in welchem Saugluft und flüssige Anteile des aus dem Mund eines Patienten abgesaugten Gemisches voneinander getrennt werden, eine horizontal Abwasserleitung angeschlossen ist, in welche zwei nach dem Sedimentationsprinzip arbeitende Feststoffabscheider eingefügt sind. Diese weisen auslaßseitig jeweils ein vom Deckel des Behälters herabhängendes Tauchrohr auf, so daß der Aufbau der Feststoffabscheider demjenigen eines Syphons ähnelt.

Durch die vorliegende Erfindung soll nun eine solche intermittierend betriebene Rohrreinigung, wie sie eingangs beschrieben wurde, verbessert werden, und hierzu wird ein Stauteil vorgeschlagen, das hinter der Bodenanschlußdose des jeweiligen Arbeitsplatzes in einen im wesentlichen horizontalen Abschnitt der zur zentralen Sauganlage führende Leitung integriert ist, wobei das Stauteil in vertikaler Richtung nur sehr kleine Abmessungen aufweist, so daß es in eine Gebäudedecke, insbesondere den Estrich, der auf eine Rohbaudecke aufgebracht ist, eingebettet werden kann.

Vorteilhafte Weiterbildungen der Erfindung sind in Unteransprüchen angegeben.

Bei einer Sauganlage gemäß Anspruch 2 ist die Unterseite der Saugleitung im Bereich des Stauteiles glatt durchgehend, was das Verlegen auf einer Gebäudedecke vereinfacht und eine gleichförmige Abstützung der Saugleitung im Bereich des Stauteiles sicherstellt.

Mit der Weiterbildung der Erfindung gemäß Anspruch 3 wird erreicht, daß das Stauteil keine Drosselstelle darstellt, da die Querschnittsverminderung in vertikaler Richtung durch eine Querschnittsvergrößerung in horizontaler Richtung kompensiert wird. Daß das Stauteil keine Druckverluste erzeugt, ist im Hinblick auf eine gute Unterdruckversorgung des Arbeitsplatzes von der zentralen Saugmaschine her von Vorteil.

Ein Stauteil gemäß Anspruch 4 kann in beliebiger Ausrichtung in die Saugleitung eingebaut werden.

Mit der Weiterbildung der Erfindung gemäß Anspruch 5 wird erreicht, daß auch der am Arbeitsplatz vorgesehen Saugkanülen-Anschlußschlauch gespült und gereinigt wird.

Gemäß Anspruch 6 erhält man gleichermaßen eine Reinigung des Saugkanülen-Anschlußschlauches und einer durch die Spüleinheit führenden Speibecken-Anschlußleitung.

Nachstehend wird die Erfindung anhand von Ausführungsbeispielen unter Bezugnahme auf die Zeichnung näher erläutert. In dieser zeigen:
- Figur 1:: eine Prinzipdarstellung eines dentalen Arbeitsplatzes zusammen mit dem diesem benachbarten Abschnitt einer zentralen Sauganlage;
- Figur 2:: einen axialen Schnitt durch ein erstes Ausführungsbeispiel eines nieder bauenden Stauteils zur Verwendung in der zentralen Sauganlage nach Figur 1;
- Figur 3:: eine Aufsicht auf die Oberseite des in Figur 1 gezeigten Stauteils;
- Figur 4:: einen axialen Schnitt durch ein abgewandeltes, symmetrisches Stauteil;
- Figur 5:: eine Aufsicht auf das in Figur 4 gezeigte Stauteil;
- Figur 6:: einen transversalen Halbschnitt durch das Stauteil nach Figur 4 längs der dortigen Schnittlinie VI-VI;
- Figur 7:: eine Halbaufsicht auf die in Figur 4 rechtsgelegene Stirnfläche des Stauteiles;
- Figur 8:: einen vertikalen Schnitt durch eine am Arbeitsplatz vorgesehene Spüleinheit der Sauganlage nach Figur 1; und
- Figur 9:: eine Aufsicht auf einen Speicherbehälter der in Figur 8 gezeigten Spüleinheit, dort von links gesehen.

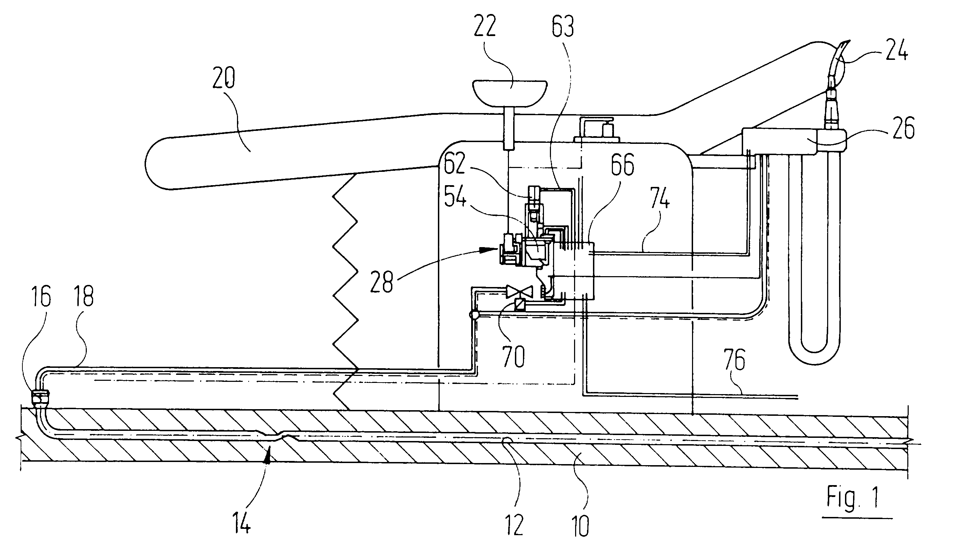

In Figur 1 ist bei 10 schematisch die Decke eines Gebäudes wiedergegeben, auf welcher ein dentaler Arbeitsplatz angeordnet ist. In die Gebäudedecke 10 ist eine Saugleitung 12 eingebettet, deren in der Zeichnung rechts gelegenes Ende mit einer in einem darunterliegenden Stockwerk angeordneten zentralen Saugmaschineneinheit verbunden ist. Die letztere umfaßt eine Saugmaschine und einen deren Einlaß vorgeschalteten Feststoffpartikel- und Flüssigkeitsabscheider.

In der Saugleitung 12, die in der Praxis aus mehreren aus Kunststoff hergestellten Rohren besteht, ist ein siphonähnliches Stauteil 14 eingefügt. Das in der Zeichnung links gelegene Ende der Saugleitung 12 ist nach oben abgewinkelt und steht mit einer Bodenanschlußdose 16 in Verbindung. Von dieser läuft ein Schlauch 18 zu dem dentalen Arbeitsplatz, an welchem schematisch ein Behandlungsstuhl 20, ein Speibecken 22, eine Saugkanüle 24, eine Kontaktablage 26 sowie eine insgesamt mit 28 bezeichnete Spüleinheit vorgesehen sind.

Mit Ausnahme des Stauteils 14 und Einzelheiten der Spüleinheit 28 und ihrer Steuerung entspricht das Arbeiten der in Figur 1 gezeigten Mehrplatz-Sauganlage für dentale Zwecke dem der Mehrplatz-Sauganlage, welche in der WO 93/16655 beschrieben ist, auf welche diesbezüglich ausdrücklich Bezug genommen wird.

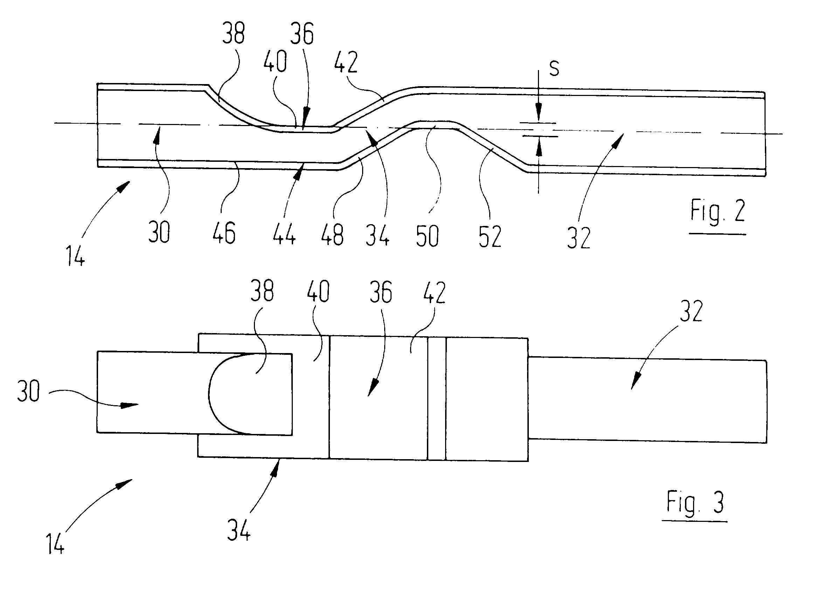

Wie insbesondere aus den Figuren 2 und 3 ersichtlich, hat das Stauteil 14 einen rohrförmigen Einlaßabschnitt 30 und einen hierzu koaxialen rohrförmigen Auslaßabschnitt 32. Diese Abschnitte sind an die Rohre der Saugleitung 12 angeschlossen.

Zwischen diesen beiden Abschnitten liegt ein Stauabschnitt 34. Dieser hat eine obere Begrenzungswand 36 mit einem abfallenden Abschnitt 38, der in seitlicher Sicht gesehen kreisbogenförmig ist, mit einem horizontalen Abschnitt 40 sowie mit einem geradlinig ansteigenden Abschnitt 42.

Eine untere Begrenzungswand 44 des Stauabschnittes 34 hat einen unteren horizontalen Abschnitt 46, der unter den Wandabschnitten 38 und 44 liegt, sowie einen schräg ansteigenden Abschnitt 48, der parallel unterhalb des Wandabschnittes 42 liegt. An den ansteigenden Wandabschnitt 48 schließt sich ein horizontaler Wandabschnitt 50 an, dessen höchster Punkt um eine Strecke s höher liegt als der tiefste Punkt des horizontalen Wandabschnittes 40. Vom horizontalen Wandabschnitt 40 führt dann ein schräg abfallender Wandabschnitt 52 zum Auslaßabschnitt 32.

Der transversale Querschnitt des Stauabschnittes 34 ist jeweils im wesentlichen rechteckig.

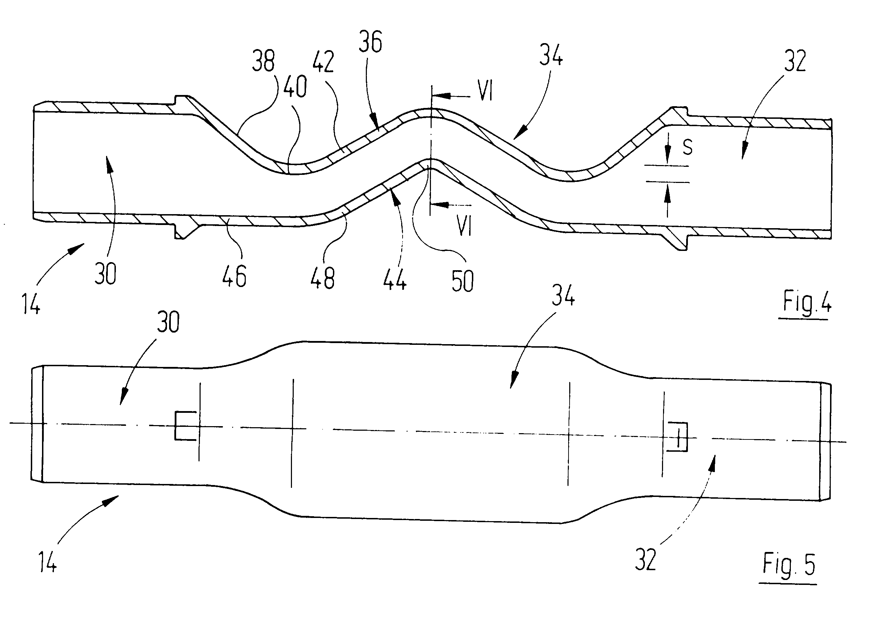

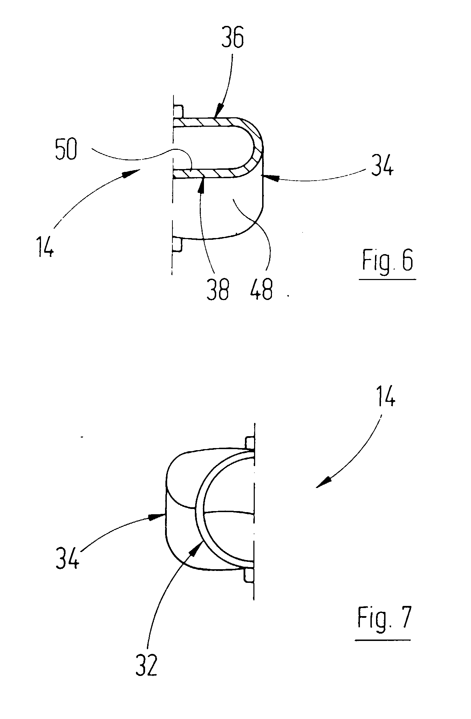

Das abgewandelte Ausführungsbeispiel nach den Figuren 4 bis 7 erhält man im wesentlichen dadurch, daß man das in den Figuren 2 und 3 gezeigten Stauteil in der Mitte des Wandabschnittes 50 auseinanderschneidet und den links gelegenen Stauteilabschnitt an der Schnittebene spiegelt.

Den Stauteilen nach den Figuren 2 und 4 ist gemeinsam, daß ein vor dem Wandabschnitt 48 stehendes Wasservolumen den direkten Durchgang für Luft unterbricht, da der durch den Wandabschnitt 50 gebildete Überlauf um die Strecke s höher liegt als der Wandabschnitt 40.

Bei dem Stauteil nach Figur 4 sind Einlaßseite und Auslaßseite nicht definiert, so daß beim Einbauen nicht auf richtige Lage von Einlaßabschnitt und Auslaßabschnitt geachtet zu werden braucht.

Das Stauteil 14 ist in der Praxis ein Kunststoff-Formteil, welches z.B. durch Blasen oder durch Zusammenfügen zweier Halbschalen erhalten werden kann, wobei die Schalen-Stoßstellen verklebt oder verschweißt werden.

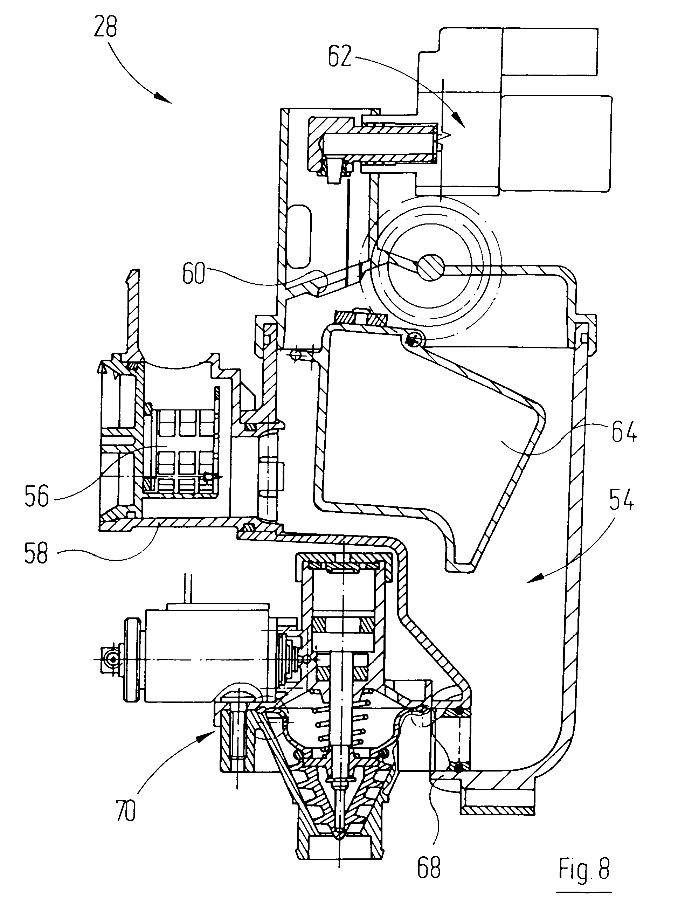

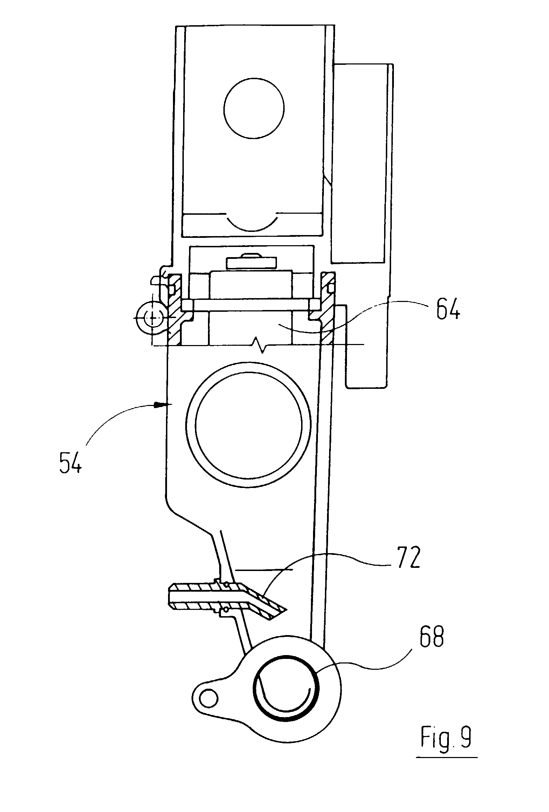

Wie aus den Figuren 8 und 9 ersichtlich, umfaßt die Spüleinheit 28 einen Speicherbehälter 54, der über einen ein Sieb 56 enthaltenden abgewinkelten Einlaßstutzen 58 mit dem Speibecken 22 verbunden ist.

Eine obere Einlaßöffnung 60 des Speicherbehälters 54 ist über ein Magnetventil 62 mit einer Frischwasserleitung 63 verbindbar.

Im Inneren des Speicherbehälters 54 ist um eine horizontale Achse verschwenkbar ein Schwimmer 64 vorgesehen. Dieser arbeitet mit einem nicht sichtbaren Reedschalter zusammen, der mit einem Eingang einer Steuereinheit 66 verbunden ist.

An einem Auslaßstutzen 68 des Speicherbehälters 54 ist ein Servoventil 70 vorgesehen, welches eine Verbindung zu dem Schlauch 18 herstellen kann. Das Servoventil 70 hat großen Durchflußquerschnitt und hat ein magnetbetätigtes Vorsteuerventil, welches durch die Steuereinheit 66 angesteuert wird.

In den unteren Abschnitt des Speicherbehälters 54 ragt ein Saugrohr 72, welches über eine Leitung 74 mit der Kontaktablage 26 verbunden ist und über diese mit dem Schlauch 18 verbindbar ist.

Die oben beschriebene Sauganlage arbeitet bezüglich des Freihaltens der Saugleitung 12 und der zu ihr führenden Stichleitungen von Ablagerungen wie folgt:

Bei der in Figur 1 gezeigten Sauganlage staut sich vor dem durch den ansteigenden Wandabschnitt 52 gebildeten Überlauf bei Nichtbenutzung der Saugkanüle 24 eine größere Wassermenge, die über die Spüleinheit 28 bereitgestellt wird. Hierzu wird über das Magnetventil 62 laufend eine kleinere Wassermenge in den Speicherbehälter 54 geleitet. Zu dieser kommen etwa über das Speibecken 22 erhaltene Wassermengen.

Von der über das Magnetventil 62 zugeführten Wassermenge (in der Praxis bei 4 bar Druck etwa 400-500 ml/min) wird bei aufgelegter Saugkanüle 24 ein Teil über das Saugrohr 72 und die Leitung 74 laufend in den Schlauch 18 gesaugt, solange die Saugmaschine der zentralen Saugeinheit noch nicht abgeschaltet ist. Letzteres erfolgt in Abhängigkeit von in den Kontaktablagen 26 aller angeschlossenen Arbeitsplätze vorgesehen mit den Saugkanülen 24 zusammenarbeitenden Schaltern, deren Ausgangssignale über Leitungen 76 der Saugmaschinen-Steuereinheit (nicht gezeigt) zugeführt werden, mit einer vorgegebenen Nachlauf-Zeitverzögerung. Die so durch den zur Kontaktablage führenden Schlauch geführte Wassermenge verhindert ein Festkleben von Feststoffpartikeln an dessen Innenwand.

Die über die Kontaktablage 26 dem Schlauch 18 zugeführte Wassermenge ist kleiner als die über das Magnetventil 62 zugeführte Wassermenge. Daher steigt der Pegel im Speicherbehälter 54 an, und hat der Schwimmer 64 eine vorgegebene Höhe erreicht, steuert die Steuereinheit 66 das Servoventil 70 auf. Das im Speicherbehälter 54 befindliche Wasservolumen fließt dann über den Schlauch 18 in die Saugleitung 12 und füllt deren stromauf des Stauteiles 14 liegenden Abschnitt bis auf die Höhe des Wandabschnittes 50. Weiter zugeführtes Wasser fließt dann über den Wandabschnitt 40 in den rechts des Stauteiles 14 liegenden Teil der Saugleitung 12.

Solange das Servotventil 70 geöffnet ist, bleibt das Reinwasser zum Tank der Spüleinheit 28 zuführende Magnetventil 62 geschlossen.

Wird nun die Saugkanüle 24 von der Kontaktablage 26 abgenommen (was gegebenenfalls zu einem Starten der Saugmaschine führt), so wird die angestaute Flüssigkeitssäule einlaßseitig mit Atmosphärendruck beaufschlagt, während ihr im Stauteil 14 liegendes Ende mit dem von der Saugmaschine erzeugten Vakuum beaufschlagt ist. Nun wird durch diese Druckdifferenz ein Gemisch aus angesaugter Luft und Wasser beschleunigt durch die Saugleitung gezogen. Die in diesem Gemisch enthaltenen Wassermenge ist größer als sie von der Spüleinheit 28 kurzfristig durch Öffnen des Servoventiles 70 bereitgestellt werden kann.

Nach dem Wiederabhängen der Saugkanüle 24 in die Kontaktablage 26 wird die Saugmaschine nach einer vorgegebenen Zeitspanne abgschaltet (unterstellt, daß an den anderen Arbeitsplätzen keine Saugkanüle abgehoben ist).

Herrscht in der Saugleitung 12 kein Vakuum mehr, wird dies der Steuereinheit 66 durch einen nicht gezeigten Vakuum-Druckschalter mitgeteilt.

Anschließend wird der stromauf des Stauteils 14 liegende Abschnitt der Saugleitung 12 wie oben beschreiben mit Wasser gefüllt, indem das Magnetventil 62 für eine ausreichende Zeitspanne geöffnet wird, um über die Spüleinheit 28 (teilweise direkt, teilweise über die Kontaktablage 26, wie oben beschrieben) ein so großes Wasservolumen der Saugleitung 12 zuzuführen, daß der Flüssigkeitsspiegel sicher den durch den Wandabschnitt 50 gebildeten Überlauf erreicht. In der Praxis dauert dies etwa 1,5 min.

Die Steuereinheit 66 für die Spüleinheit 26 läßt ein neues Befüllen der Saugleitung 12 erst zu, wenn die Saugkanüle 24 zwischenzeitlich einmal abgenommen worden ist.

Wird nach dem Füllen des vor dem Stauteil 14 liegenden Abschnittes der Saugleitung 12 die Saugkanüle 24 das erstemal abgehoben, so wird die Saugmaschine inganggesetzt, falls sie nicht schon vorher lief. Aus der vor dem Stauteil 14 stehenden Wasservorlage in der Saugleitung erhält man nun einen Wasserpropfen, der Schmutzpartikel, die sich in der Saugleitung 12 abgesetzt haben, hochreißt und in Richtung Saugmaschine dreht, wie oben schon beschrieben.

Auf diese Weise wird ein Festbacken von Feststoffpartikeln und ein Zuwachsen der Saugleitung 12 verhindert.

## Patentansprüche

1. Dentale Sauganlage, vorzugsweise Mehrplatz-Sauganlage, mit einer Saugeinheit, die über mindestens eine Saugleitung (12) mit einem Arbeitsplatz verbunden ist, mit einer Einrichtung zum Aufstauen eines Wasservolumens beim dem Arbeitsplatz benachbarten Ende der Saugleitung und mit einer Einrichtung zur Beaufschlagung des einen Endes des Wasservolumens mit einem über dem von der durch die Saugeinheit erzeugten Unterdruck liegenden Druck, vorzugsweise Atmosphärendruck, dadurch gekennzeichnet, daß die Aufstaueinrichtung ein in einem im wesentlichen horizontalen Abschnitt der Saugleitung (12) angeordnetes Stauteil (14) aufweist, welches mit einem Einlaßabschnitt (30), einem Auslaßabschnitt (32) und einem dazwischenliegenden Stauabschnitt (34) versehen ist, wobei in dem Stauabschnitt (34) eine Überlaufwand (48) vorgesehen ist, wobei der Einlaßabschnitt (30) und der Auslaßabschnitt (32) koaxiale Rohrstutzen sind, wobei der Stauabschnitt (34) eine obere Begrenzungswand (36) aufweist, die einen Abschnitt (40) aufweist, der tiefer (s) liegt als der oberste Punkt (50) der Überlaufwand (48).

2. Sauganlage nach Anspruch 1, dadurch gekennzeichnet, daß eine untere Begrenzungswand (44) des Stauabschnittes (34) in radialer Richtung mit der untersten Mantellinie von Einlaßabschnitt (30) und Auslaßabschnitt (32) im wesentlichen fluchtet.

3. Sauganlage nach Anspruch 1 oder 2, dadurch gekennzeichnet, daß der Stauabschnitt (34) in transversaler Richtung größere Abmessung aufweist als die Rohrstutzen.

4. Sauganlage nach einem der Ansprüche 1 bis 3, dadurch gekennzeichnet, daß das Stauteil (14) zu einer Quermittelebene symmetrisch ausgebildet ist.

5. Sauganlage nach einem der Ansprüche 1 bis 4, dadurch gekennzeichnet, daß sich zwischen einer Ablage (26) für eine Saugkanüle (24) und einem Speicherbehälter (54) einer Spüleinheit (28), über welche der Saugleitung (12) Frischwasser zuführbar ist, eine Spülleitung (74) erstreckt, über welche bei abgelegter Saugkanüle (24) aus dem Speicherbehälter (54) laufend eine Wassermenge entnommen und einem zur Saugkanüle (24) führenden Schlauch (18), der mit der Saugleitung (12) verbunden ist, zugeführt wird.

6. Sauganlage nach Anspruch 5, dadurch gekennzeichnet, daß die über die Spülleitung (74) abgezogene Wassermenge kleiner ist als eine dem Speicherbehälter (54) von einer Frischwasserleitung (63) zugeführte Wassermenge, und eine der Spüleinheit (28) zugeordnete Steuereinheit (66) ein am Auslaß des Speicherbehälters (54) vorgesehenes Servoventil (70) öffnet, wenn der Flüssigkeitsstand im Speicherbehälter (54) einen vorgegeben Pegel erreicht hat.

## Claims

1. A dental suction system, preferably a multi-station suction system, comprising a suction unit which is connected to a work station *via* at least one suction line (12), a device for banking-up a volume of water at the end of the suction line adjacent to the work station, and a device for applying to one end of the volume of water a pressure above the negative pressure produced by the suction unit, preferably atmospheric pressure, characterised in that the banking-up device has a banking-up part (14) which is arranged in a substantially horizontal section of the suction line (12) and which is provided with an inlet section (30), an outlet section (32) and a banking-up section (34) lying between the latter, an overflow wall (48) being provided in the banking-up section (34), the inlet section (30) and the outlet section (32) being coaxial pipe sockets, the banking-up section (34) having an upper boundary wall (36) having a portion (40) that is lower (s) than the highest point (50) of the overflow wall (48).

2. A suction system according to claim 1, characterised in that a lower boundary wall (44) of the banking-up section (34) is substantially in alignment in the radial direction with the lowest surface line of inlet section (30) and outlet section (32).

3. A suction system according to claim 1 or 2, characterised in that the banking-up section (34) has a larger dimension than the pipe sockets in the transverse direction.

4. A suction system according to any one of claims 1 to 3, characterised in that the banking-up part (14) is constructed symmetrically with respect to a transverse mid-plane.

5. A suction system according to any one of claims 1 to 4, characterised in that a flushing line (74) extends between a rest (26) for a suction cannula (24) and a storage vessel (54) of a flushing unit (28) by means of which fresh water can be supplied to the suction line (12), *via* which flushing line (74), when the suction cannula (24) is placed on the rest, a quantity of water is continuously drawn from the storage vessel (54) and fed to a tube (18) which leads to the suction cannula (24) and which is connected to the suction line (12).

6. A suction system according to claim 5, characterised in that the quantity of water drawn off *via* the flushing line (74) is smaller than a quantity of water supplied to the storage vessel (54) by a fresh water line (63), and a control unit (66) assigned to the flushing unit (28) opens a servo valve (70) provided at the outlet of the storage vessel (54) when the liquid in the storage vessel (54) has reached a predetermined level.

## Revendications

1. Système d'aspiration de dentiste, de préférence système pour plusieurs postes, avec une unité d'aspiration reliée à un poste de travail à l'aide d'au moins une conduite d'aspiration (12), avec un dispositif pour accumuler un volume d'eau à l'extrémité de la conduite d'aspiration adjacente au poste de travail et avec un dispositif pour la mise sous pression d'une extrémité du volume d'eau avec une pression supérieure à la sous-pression créée par l'unité d'aspiration, de préférence une pression atmosphérique, **caractérisé en ce que** le dispositif d'accumulation présente une pièce de retenue (14) placée dans une section essentiellement horizontale de la conduite d'aspiration (12) et munie d'une section d'entrée (30), d'une section de sortie (32) et d'une section de retenue (34) intermédiaire, une paroi de débordement (48) étant prévue dans la section de retenue (34), la section d'entrée (30) et la section de sortie (32) étant des embouts coaxiaux la section de retenue (34) présentant une paroi de limitation supérieure (36) qui présente une section (40) plus basse (S) que le point culminant (50) de la paroi de débordement (48).

2. Système d'aspiration selon la revendication 1, **caractérisé en ce qu'**une paroi de limitation inférieure (44) de la section de retenue (34) s'aligne essentiellement en direction radiale sur la génératrice la plus basse de la section d'entrée (30) et de la section de sortie (32).

3. Système d'aspiration selon la revendication 1 ou 2, **caractérisé en ce que** la section de retenue (34) présente une plus grande dimension en direction transversale que les embouts.

4. Système d'aspiration selon l'une des revendications 1 à 3, **caractérisé en ce que** la pièce de retenue (14) est formée de façon symétrique par rapport à un plan transversal intermédiaire.

5. Système d'aspiration selon l'une des revendications 1 à 4, **caractérisé en ce qu'**une conduite de rinçage (74) s'étend entre un récepteur (26) pour une canule d'aspiration (24) et un récipient d'accumulation (54) d'une unité de rinçage (28), à l'aide de laquelle de l'eau fraîche peut être amenée à la conduite d'aspiration (12), la conduite de rinçage permettant de prélever en permanence une certaine quantité d'eau dans le récipient d'accumulation (54), lorsque la canule d'aspiration (24) est déposée, et de l'amener à un tuyau (18) relié à la conduite d'aspiration (12) et conduisant à la canule d'aspiration (24).

6. Système d'aspiration selon la revendication 5, **caractérisé en ce que** la quantité d'eau retirée par la conduite de rinçage (74) est inférieure à la quantité d'eau amenée au récipient d'accumulation (54) par une conduite d'eau fraîche (63), et qu'une unité de commande (66) attribuée à l'unité de rinçage (28) ouvre une servo-soupape (70) prévue à la sortie du récipient d'accumulation (54) lorsque le niveau de liquide a atteint un niveau prédéfini dans le récipient d'accumulation (54).
